Europäisches Patentamt

European Patent Office

Office européen des brevets

(11) Publication number: **0 062 466**
**A1**

# EUROPEAN PATENT APPLICATION

(21) Application number: **82301618.3**

(22) Date of filing: **26.03.82**

(51) Int. Cl.³: **G 01 N 27/16**

(30) Priority: **04.04.81 GB 8110625**

(43) Date of publication of application: **13.10.82**
**Bulletin 82/41**

(84) Designated Contracting States: **CH DE FR IT LI NL SE**

(71) Applicant: **English Electric Valve Company Limited, 106, Waterhouse Lane, Chelmsford, Essex, CM1 2QU (GB)**

(72) Inventor: **Edgington, Bruce Robert, 1, Oakdale Road, Poole Dorset (GB)**
Inventor: **Jones, Eric, 34, Chignall Road, Chelmsford Essex (GB)**

(74) Representative: **Hooper, John Peter Lindesay et al, Marconi House New Street, Chelmsford, Essex CM1 1PL (GB)**

(54) **Combustible-gas detectors.**

(57)   Combustible-gas detectors (of the kind in which a heatable wire filament constituting the detector element exhibits a change in resistance occasioned by the change in its temperature which occurs due to the oxidation of a combustible gas passing over it) usually embed the wire filament in a pellet of ceramic material coated with, or including therewithin, an oxidation catalyst. Unfortunately non-volatile residues – such as lead or silicone vapours – can poison the catalyst and/or obstruct the normal flow of gas to the element's surface, so reducing the sensitivity of the device.

   The present invention allows the construction of a detector pellet having greater resistance to catalyst poisoning, especially by silicones, achieving this by building the pellet as a multilayered structure rather like an onion. The invention provides a combustible-gas detector element comprising a heatable wire filament (10; preferably a helical platinum wire) embedded in a pellet formed overall of an oxidation catalyst (preferably palladium) and a porous non-catalytic inert carrier therefor (preferably 75wt% alumina, 25wt% zeolite), wherein the pellet has a laminated, onion-like structure, and consists of a multiplicity (preferably 6 to 20) of concentric layers in which layers of carrier (11, 13, 15, 17; preferably in pairs) alternate with layers of catalyst (12, 14, 16).

ACTORUM AG

## 0062466

### COMBUSTIBLE-GAS DETECTORS

This invention relates to combustible-gas detectors, and concerns more particularly combustible-gas detectors of the kind in which a heatable wire filament constituting the detector element exhibits a change in resistance occasioned by the change in its temperature which occurs due to the oxidation of a combustible gas passing over it, the resistance change being utilised to provide an indication of the concentration of the combustible gas.

Whilst it is possible to use as the detector element a naked wire filament, it is nowadays more common to use as the element a wire filament which is embedded in a pellet of ceramic material, so providing a more rugged structure, and generally the pellet is coated with, or there is included within the mix from which the pellet is made, an oxidation catalyst which reduces the temperature at which oxidation of the combustible gas takes place. A difficulty which has been experienced with catalytic detectors of this type is that in some circumstances changes in the electrical characteristics of the detector occur in service. These changes are believed to be due to non-volatile residues deposited on the surface of the detector element, which residues tend to poison the catalyst and/or obstruct the normal flow of gas to the element's surface, so reducing the sensitivity of the device. One such poisonous residue is lead (derived from the burning of leaded petroleum spirit vapour), while another is the class of silicones (silicon-containing compounds analogous to the carbon-containing compounds of organic life), and this latter class is becoming a significant problem as the utilisation of silicones increases. One classic use of combustible-gas detectors occurs in coal mines, where it is required to detect and measure the level of methane (fire-damp) in the atmosphere; unfortunately, the machinery used adjacent the detector may well employ silicone rubber seals and gaskets, and silicone-based lubricating oils, and all of these inevitably release silicone vapours into the atmosphere so that the ambient environment is loaded with material poisonous to the detector catalyst.

Many attempts have already been made to produce detectors which are unaffected by the more obvious catalyst poisons. For example: in the Complete Specification of our British Letters Patent No.1,549,640 (I/5958/V) we have described how the detector pellet may be given an outer coating of a non-catalytic porous material (thus, alumina or a zeolite); in the Complete Specification of our British Letters Patent No.1,554,831 (I/6142/V) we have described giving the pellet an outer porous layer of a mixture of a zeolite and kaolin; and in the Complete Specification of our British Letters Patent No.1,556,339 (I/6076/V) we have described making the pellet of a homogenous mixture of catalyst and zeolite (optionally with alumina). All these pellets have had improved resistance to poisoning, and yet even so have succumbed sooner than considered desirable.

It is the purpose of the present invention to allow the formation of a detector pellet having even greater resistance to catalyst poisoning, especially by silicones, and the invention seeks to achieve this by building the pellet as a multilayered structure rather like an onion.

In one aspect, therefore, this invention provides a combustible-gas detector element comprising a heatable wire filament embedded in a pellet formed overall of an oxidation catalyst and a porous non-catalytic inert carrier therefor, wherein the pellet has a laminated, onion-like structure, and consists of a multiplicity of concentric layers in which layers of carrier alternate with layers of catalyst.

The detector element of the invention employs a heatable wire filament the electrical resistance of which changes with temperature, such a temperature change occuring when the combustible gas being detected is burnt (oxidized) in contact with the filament. The filament should accordingly be of a material that exhibits the desired characteristics, and that is in particular relative chemically inert to the combustible gas, its oxidation products, and any likely contaminants.    Suitable filament materials (and filament structures) are well known in the art;   the preferred one is platinum or one of its alloys, for example a platinum/zirconia alloy as described in the Complete Specification of our British Patent No.1,567,736 (I/6174/V), the filament taking the form of a helical winding.

The oxidation catalyst employed with the detector element may be any of those catalysts or mixtures of catalysts used or suggested for use for this purpose. Preferably, however, it is palladium or platinum. As explained hereinafter, the catalyst is conveniently employed "admixed" with some of the carrier material together with one or more refractory oxides.

The detector element of the invention uses a non-catalytic inert material with a porous structure as the carrier for the oxidation catalyst.    Again, the carrier may be any of those carriers or mixtures of carriers used or suggested for use for this purpose.    Preferably, however, it is alumina (aluminium oxide), employed in fine (up to 10 micrometres) powder form, advantageously mixed with a proportion - about 25% by weight, say - of an acid-stable high silica alumina-silicate (a zeolite such as H-mordenite, for example).

The detector element pellet of the invention exists as a laminated, or onion-like, structure.  Thus, it consists of a multiplicity of concentric layers, layers of catalyst (conveniently "admixed" with some carrier material) alternating with layers of carrier (the term "concentric" is here used loosely;   it is not intended to mean that the layers should be truly spherical, or truly concentric, merely that they should approximate to each in so far as they can).    There may be any number of layers ("lamina"), provided that they are sufficient in number and thickness fully to cover the detector filament, and provided there is a reasonable minimum number - say, two or three - of each kind; the layers may be of any reasonable thickness; and the term "alternating" is also used loosely, and intended to cover sequences of layers other than that in which the two types strictly alternate (so that there may be, for example, two carrier layers between two catalyst layers). Nevertheless, preferably: the pellet as a whole has at least 5 layers (of which two are catalyst), and conveniently has from 6 to 20 layers (with more than 20 layers the pellet tends to be so large - relatively speaking - that heat loss from its surface distorts the results) slightly more of which are carrier than catalyst; the carrier layers are from 0.05 to 0.2mm thick, while the catalyst layers are very much thinner (about 0.01mm); and the layers do "alternate" so that within the body of the pellet a catalyst layer follows two carrier layers. The final layer - that is, the external layer - may be either catalyst or carrier; the latter is marginally preferred in most cases, but it depends primarily upon the type of heat radiation compensation that is to be employed. A specific preferred detector pellet has 9 layers - an inner layer of carrier, followed by 1 of catalyst, 2 of carrier, 1 of catalyst, 2 of carrier, 1 of catalyst, and a final (external) layer of carrier.

Apart from the provision of alternating layers of carrier and catalyst, the detector element pellet of the invention may be made by what is generally one of any of the standard methods for making detector element pellets. In particular, it may be made by the dipping of the filament into a slurry of carrier (or a solution/slurry of catalyst) followed by a curing (or conditioning) heat treatment, this being repeated as many times as is appropriate. Thus, for instance, to produce each carrier layer the filament (or pellet so far) is dipped into an organic slurry of alumina in a mixture of acetone and methanol, dried, and then heated for a few seconds to about $1000^{\circ}C$ (conveniently using the detector filament as a heating element) to cure the carrier slurry layer so formed.   The slurry can with advantage also contain various additives, for example:  a methacrylate binder; aluminium nitrate (which is converted to crystalline aluminium oxide, further binding the carrier together); calcium nitrate; thorium nitrate (which is converted to the refractory thorium oxide, improving the stability of the carrier); and a zeolite such as H-mordenite.  To produce each desired catalyst layer the pellet so far is dipped into an aqueous acid solution of a suitable salt of the chosen catalyst, and then "conditioned" by exposing it to air containing a high concentration of some suitable combustible vapour/gas (which it catalytically oxidises at about $1000^{\circ}C$). The catalyst solution can be ammonium chloropalladite in $1/3M$ aqueous $HNO_3$, preferably containing some thorium nitrate, and the subsequent conditioning can be effected by exposing the dried pellet to a stream of 30 to 40 vol.% methane in air, allowing the pellet temperature to reach $1000^{\circ}C$, for several minutes.

The invention extends, of course, to a detector element of the invention whenever made by such a process.

It is not entirely clear why the onion-skin layered detector element of the invention should be so much better - so much more resistant to poisoning by silicone vapours - than earlier elements (as, for example, those of our aforementioned Specifications Nos. 1,549,640 or 1,556,339).   Presumably the inert carrier acts as a filter, preventing the relatively large poison molecules from reaching the catalyst disposed further within the pellet, and it seems reasonable to suppose that the layering of the pellet into successive layers of catalyst and carrier serves further to reduce the amount of catalyst that is poisoned.   Whatever the explanation, it

- 6 -

0062466

remains a fact that tests (discussed in more detail hereinafter) have shown that whereas earlier pelletised
detector elements can have their sensitivity (to the
combustible gas) halved in as little as 45 minutes upon
exposure to a typical test silicone poison at 5p.p.m, the
elements of the invention show a sensitivity drop of less
than 5% under the same conditions, which is surely proof
of the surprising efficiency of the inventive pellet
construction.

The detector pellet of the invention will usually be
employed in a bridge circuit of the type disclosed in our
aforementioned Specifications, and no more need be said
about that here, except to point out that the invention
extends, of course, to any apparatus for the detecting
of combustible gases  when employing an inventive detector
element pellet.

An embodiment of the invention is now described, though only by way of illustration, with reference to the accompanying drawings in which:

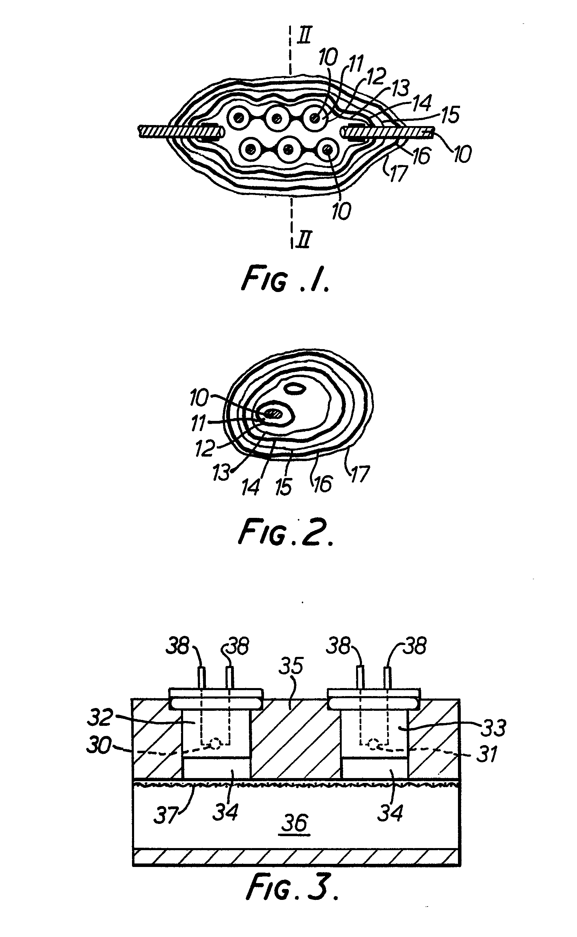

Figure 1 shows an axial cross-section (in diagrammatic, not-to-scale, form) of a detector element pellet of the invention;

Figure 2 shows a cross-axial cross-section of the same pellet (taken on the line II-II in Figure 1);

Figure 3 is an axial cross-section of a conventional holder for a detector element (with a side-by-side compensating element), as used in the Test described hereinafter;

Figure 4 is a circuit diagram showing the manner in which the detector element is connected up in use (and in the Test described hereinafter);  and

Figure 5 is a graph representing the Test Results obtained using the Test described hereinafter.

As is more or less self-evident from the Figures, the inventive detector element pellet there depicted comprises a helical coil of wire (10) with a multi-layer coating made up (from the inside) of:  a single carrier layer (11);  a catalyst layer (the heavy line, 12);  a double carrier layer (13);  a second single catalyst layer (14);  a second double carrier layer (15);  a third single catalyst layer (16); and a final (external) carrier layer (17) - nine layers in all.  The pellet structure is onion-like, layers of carrier "alternating" with layers of catalyst, each layer being roughly concentric with the pellet as a whole.

The following Example is now given, though also only by way of illustration, to show details of one embodiment of the invention.

Example: Preparation of an inventive Detector Element Pellet.

A) Preparation of the carrier slurry

A first organic slurry of alumina carrier combined with organic binder was made by mixing the following ingredients:

Washed Alumina Powder (<10 micrometre).......1600g

Methacrylate binder

( DIAKON acrylic polymer........... 86g)
( Acetone ............................1000ml)
( Methanol..........................1000ml)...2250ml
( di-Acetone alcohol.............. 275ml)
( diButyl phthalate............... 43ml)

Calcium nitrate

( Calcium nitrate (anhydrous).....80.5g )
( Acetone ........................400ml ).......15ml
( Methanol........................400ml )

Aluminium nitrate

( Aluminium nitrate (hydrate)....28.16g )
( Acetone........................80ml ).....10ml
( Methanol........................80ml )

This slurry was then further admixed with thorium nitrate, H.mordenite and alumina, to make the final, ready-for-use, carrier slurry, as follows:-

First alumina slurry................ 5ml

Thorium nitrate (as a saturated
50:50 methanol/acetone solution)..1ml

H. mordenite.......................0.3g

Alumina powder (<10 micrometre)....0.3g

B) Preparation of the Catalyst Solution

12.8g ammonium chloropalladite were dissolved in sufficient 1/3M aqueous nitric acid, the whole being made up to 50mls with more acid. 65g thorium nitrate were dissolved in 40ml water. Equal volumes of the two solutions were then combined to give the desired catalyst solution.

## C) Formation of the Detector Element Pellet

A suitable platinum wire (about 0.05mm diameter) coiled into helical form (about 15 turns per mm) was pelletised in accordance with the invention in the following manner.

The coil was first dipped into the carrier coating slurry (see (A) above), then removed. An electric current was passed through the coil sufficient to raise its temperature to about $1000^{\circ}C$, and the coil was maintained at that temperature (in air) for 2 seconds, whereupon it was allowed to cool to room temperature. It then bore a coating of "fused" but porous aluminium oxide about 0.1mm thick.

The thus-coated coil was then dipped into the catalyst solution (see (B) above), removed, and heated to about $1000^{\circ}C$ for 2 seconds (again, by using the coil as its own heating element) so as to decompose the catalyst. It was then placed for "conditioning" in a stream of 40 vol.% methane, 60 vol.% air at ambient temperature and pressure, and left for 5 seconds, during which the catalytic reaction (oxidising the methane) taking place raised its temperature to about $1000^{\circ}C$. The coil was removed, and allowed to cool; it then bore a very thin "palladium" layer partly diffused into the underlying layer of alumina.

The carrier-coating and catalyst-coating procedures were then repeated to give the pellet in all a sequence of 9 coatings comprising carrier (inner), catalyst, carrier, carrier, catalyst, carrier, carrier, catalyst and carrier (outer). The finished pellet was about 1.4mm in diameter.

## The Test

### A) The Apparatus

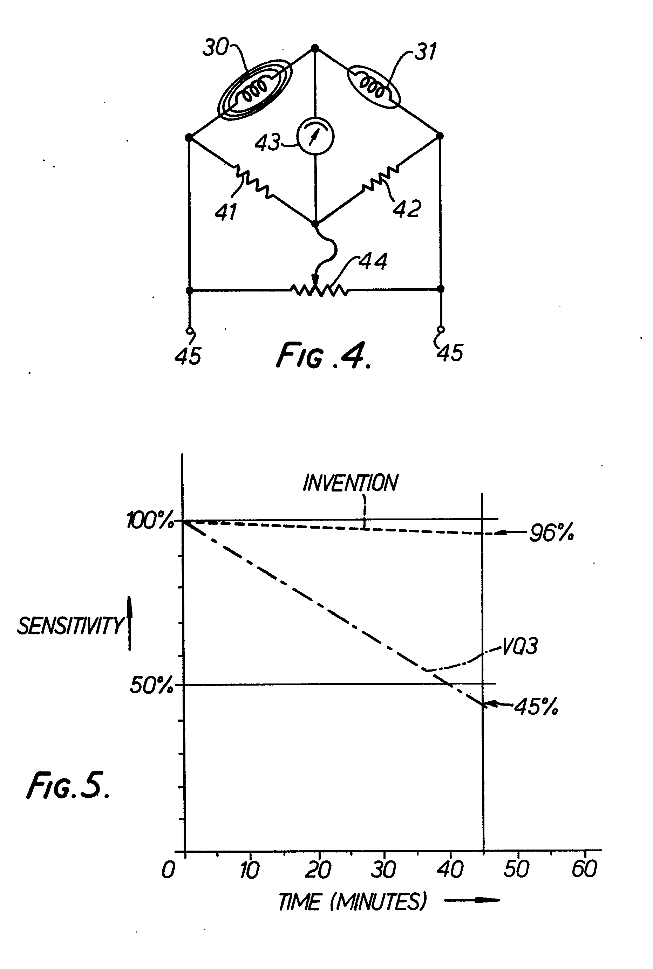

The inventive detector element pellet made according to the above-described procedure was then subjected to an accelerated poison test (described hereinafter), being compared with a Prior Art pellet of the simple type consisting of a similar helical platinum wire pelletised in alumina and having an outer layer of palladium mixed with thorium oxide (and commercially available from English Electric Valve Co. Limited as the VQ3). In each case the element was used in a bridge together with an inactive, compensating element, the two elements being mounted side-by-side in a standard holder of the type shown in Figure 3 of the accompanying drawings. In this standard holder the detector element (30) and the compensating element (31) are each mounted within a holder (32,33 respectively), secured within bores (34) in the thickened side wall (35) of a pipe (36) through which flows the gas being used in the Test. Each bore 34 communicates with the interior of the pipe 35 but is separated therefrom by a wire gauze filter (37) lining that part of the pipe interior surface. The conductive terminals (as 38) of each element are in use connected into a bridge circuit as shown in Figure 4.

In the circuit of Figure 4 the detector element 30 is included in one arm of a balanced bridge arrangement consisting of resistors (41,42) of equal value and the compensating element 31. Across the bridge is connected a voltmeter (43), calibrated to indicate combustible gas concentrations. The meter may be set at zero by the adjustment of the slider on a potentiometer (44). Terminals (as 45) allow the bridge to be connected to a source of power (not shown) providing both the heating current for the detector element filaments and the voltage of the bridge.

Except for the nature of the detector element 30, the arrangement is, in fact, as known per se.

In operation the detector element 30 and the compensating element 31 are exposed to a normal atmosphere, and the slider/potentiometer 44 is adjusted to give a zero reading on the meter 43. The two elements are then exposed to the test atmosphere which it is required to monitor. The large "poison" molecules in the atmosphere tend to remain on or in the outer porous carrier layers 15 and 17, whilst the smaller combustible gas molecules tend to diffuse through to the inner catalyst layers 12 and 14, to oxidise in the normal way. Naturally, no catalytic oxidation occurs on the surface of the compensating element 7. Relatively, therefore, the temperature of the detector element 30 rises, with a consequent change in its resistance, and the reading of the meter 43 then provides a measure of the concentration of the combustible gas in the test atmosphere.

B) The Test Atmosphere

Each of the two detector elements was first tested with an atmosphere of 1 vol.% methane in air at room temperature (about $20^{o}C$) to establish a basic value for its sensitivity before poisoning. Each was then subjected to an atmosphere of 5 p.p.m. hexamethyldisiloxane (HMDS) in air containing 1 vol.% methane at room temperature (using the apparatus of Figure 3 this Test Atmosphere was driven past the elements at a rate of 500ml per minute) and the actual value it gave (using the circuit of Figure 4) for the methane content was taken every five minutes and converted into a percentage sensitivity figure, indicating the degree of poisoning, and plotted to give the graphs of Figure 5. Thus, a reading showing an apparent methane content of 0.8 vol.% - 80% of the true value - was converted to an 80% sensitivity value, and so on.

HMDS was chosen as the Test silicone poison because it is convenient and representative of the vapours arising from silicone oils and rubbers. 5 p.p.m. is a much higher amount than would normally arise, but provides an Accelerated Poisoning Test that correlates fairly well with the results obtainable in a real situation.

C) The Results

The results of the Test are shown graphically in Figure 5. It will immediately be apparent that the detector element of the invention performed very well, losing a mere 5% of its original sensitivity in 45 minutes, while the Prior Art VQ3 device lost as much as 50% in the same time. In a real life situation this could mean that the VQ3 would need replacing every day, while the inventive detector could last for several weeks.

CLAIMS:-

1. A combustible-gas detector element comprising a heatable wire filament embedded in a pellet formed overall of an oxidation catalyst and a porous non-catalytic inert carrier therefor, wherein the pellet has a laminated, onion-like structure, and consists of a multiplicity of concentric layers in which layers of carrer (11,13,15,17) alternate with layers of catalyst (12,14,16).

2. An element as claimed in claim 1, wherein the filament is made of platinum or one of its alloys.

3. An element as claimed in either of the preceding claims, wherein the oxidation catalyst is palladium or platinum.

4. An element as claimed in any of the preceding claims, wherein the carrier is alumina "employed" in fine powder form.

5. An element as claimed in claim 4, wherein the alumina is mixed with a proportion of an acid-stable high silica alumina-silicate.

6. An element as claimed in any of the preceding claims, wherein there are at least three layers of each kind of material.

7. An element as claimed in claim 6, wherein there are from 6 to 20 layers in all, slightly more of which are carrier than catalyst.

8. An element as claimed in any of the preceding claims, wherein the layers "alternate" so that within the body of the pellet a catalyst layer follows two carrier layers.

9. An element as claimed in any of the preceding claims, wherein the carrier layers are from 0.05 to 0.2mm thick, while the catalyst layers are very much thinner (about 0.01mm).

10. A process for the preparation of a detector element pellet as claimed in any of the preceding claims, which involves dipping the filament into a slurry of carrier - or a solution/slurry of catalyst - followed by a curing

or conditioning heat treatment, this being repeated as many times as is appropriate.

11. A detector element pellet as claimed in any of claims 1 to 9, whenever made by a process as claimed in claim 10.

12. Apparatus for the detecting of combustible gases, which apparatus includes a detector element pellet as claimed in any of claims 1 to 9 and 11.

FIG. 1.

FIG. 2.

FIG. 3.

FIG .4.

FIG.5.

European Patent
Office

**EUROPEAN SEARCH REPORT**

0062466
Application number

EP  82 30 1618

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| A | DE-A-1 598 678  (KOMYO RIKAGAKU KOGYO K.K.) *Claim 5* | 1-4,10 | G 01 N  27/16 |
| D,A | FR-A-2 401 419  (ENGLISH ELECTRIC VALVE COMPANY) *Claims* | 1-4 | |
| D,A | FR-A-2 357 892  (ENGLISH ELECTRIC VALVE COMPANY) *Claims* | 1-4 | |
| A | FR-A-2 287 698  (DICTAPHONE CORPORATION) *Claims* | 1-4,10 | |
| A | FR-A-2 347 680  (MATSUSHITA ELECTRIC INDUSTRIAL) *Claims* | 1-4 | TECHNICAL FIELDS SEARCHED (Int. Cl. ³) |
| A | US-A-4 072 467  (E.JONES) *The whole document* | 1-4 | G 01 N  27/16 |
| A | US-A-3 200 011  (A.R.BAKER) *The whole document* | 1 | |
| A | GB-A-2 011 088  (A-T-O INC.) *Abstract; page 1, lines 112-127; page 2, lines 1-101* | 1 | |

The present search report has been drawn up for all claims

| Place of search | Date of completion of the search | Examiner |
|---|---|---|
| THE HAGUE | 01-07-1982 | CALLEWAERT-HAEZEBROU |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03.82